# EUROPEAN PATENT SPECIFICATION

(11) **EP 3 115 248 B1**
(45) Date of publication and mention of the grant of the patent: **21.08.2019**
(21) Application number: 16184146.5
(22) Date of filing: 24.06.2014
(51) Int. Cl.: B60L 5/18, B60M 7/00, B60L 5/24, B60L 53/14, B60L 53/30, B60L 5/38, B60L 5/42

(54) **VEHICLE CHARGING CONNECTORS**
FAHRZEUGLADEVERBINDER
CONNECTEURS DE CHARGEMENT DE VÉHICULE

(30) Priority: 25.06.2013 GB 201311246
(43) Date of publication of application: 11.01.2017
(62) Divisional of application: 14745231.2
(73) Proprietor: Furrer + Frey AG, 3005 Bern (CH)
(72) Inventor: Bedell, Roger, E-18190 Granada (ES)
(74) Representative: Noble, Frederick

(56) References cited:
- EP-A1- 1 997 668
- WO-A1-00/66388
- WO-A2-2011/079215
- GB-A- 1 480 311
- GB-A- 2 475 703
- US-A1- 2011 256 737
- Volvo buses: "Volvo Buses Plug-in Hybrids hit the streets of Gothenburg", , 13 May 2013 (2013-05-13), XP054975869, Retrieved from the Internet: URL:https://www.youtube.com/watch?v=aYq_bu zIy98 [retrieved on 2015-05-20]

## Description

The present invention relates to vehicle charging connectors.

### Background to the Invention

Electric vehicles, and in particular electric buses, are known. Electric buses offer the potential of urban public transport which is quieter and less polluting than buses powered by diesel engines, improving the air quality and level of noise in city centres. However, various practical problems have prevented widespread adoption of electric vehicle technology.

Some electric vehicles, such as trams, receive power directly from an electrical grid, for example by overhead lines. However, installing tram systems requires a great deal of initial investment, and once installed the route of a tram cannot easily be altered. Electric buses avoid these problems by storing power in batteries carried on the bus. These batteries must be regularly charged.

One method of charging batteries in an electric bus involves the use of an overhead charging gantry, having conductors which deliver power through receiving conductors mounted to the roof of the bus. One such arrangement is disclosed in GB2475703. In this arrangement, two movable pantographs are provided on the roof of the bus, one behind the other. The pantographs can be moved upwards from the bus to meet charging conductors on a charging gantry, to charge the batteries of the bus.

When charging a vehicle, it is known to provide a "pilot" connection for allowing communication between the charger and the vehicle being charged. The pilot connection is used to test, among other things, continuity of the charging conductors before charging begins.

Although the above-described charging arrangement is designed to allow for a certain amount of tolerance in the position of the vehicle, it is possible for the vehicle to be parked at the very edge of its tolerance. In this state, the charging conductors on the charger would be electrically connected to the receiving conductors on the vehicle, but the connection may not be sound enough to effect safe charging at high current. There may be only a small area of contact between a charging conductor and its respective charge receiving member. However, this will not be apparent when performing a low-current test using a pilot connector. If charging begins when the connection is poor, there is a risk of overheating, damage to equipment, and possibly fire.

A further problem with the charging arrangement of GB2475703 is that it relies on moving parts to engage and disengage the vehicle from the charging station. If the pantographs on the roof of the bus cannot be moved for some reason, for example, due to failure of a power supply, motor, or control electronics, then the bus cannot be moved out of the charging station without causing damage to components.

US 2011/256737 A1 discloses an electrical coupling system for an electrical charging device having energy storage means of an electrically driven vehicle. There is a support with retractable electrically conducting plates, and the support can be plugged into a recess in the floor. There is a protective element to cover the recess and retracted plates.

WO 2011/079215 A2 discloses systems and methods for charging a vehicle using a charging station, such that an electric or hybrid vehicle can operate by being opportunity charged throughout a known route.

WO 00/66388 A1 discloses a method and device for energy accumulation and recuperation in electric cars and electric vehicles with electric or hybrid drive.

It is an object of the invention to reduce or substantially obviate the above-mentioned problems.

### Statement of Invention

There is provided a vehicle charging connector as set out in claim 1. Preferable and/or optional features of the invention are set out in claims 2 to 15.

### Description of the Drawings

For a better understanding of the present invention, and to show more clearly how it may be carried into effect, reference will now be made, by way of example, to the accompanying drawings, in which:
Figure 1 shows a perspective view of a vehicle charging arrangement in use, charging a bus;
Figure 2 shows a plan view from above of the vehicle charging arrangement of Figure 1;
Figure 3 shows a perspective view from in front of the vehicle charging arrangement of Figure 1, with the vehicle disengaged from the charging gantry; and
Figure 4 shows a schematic plan view from above of charging conductors, forming part of the charging arrangement of Figure 1.

### Description of Preferred Embodiments

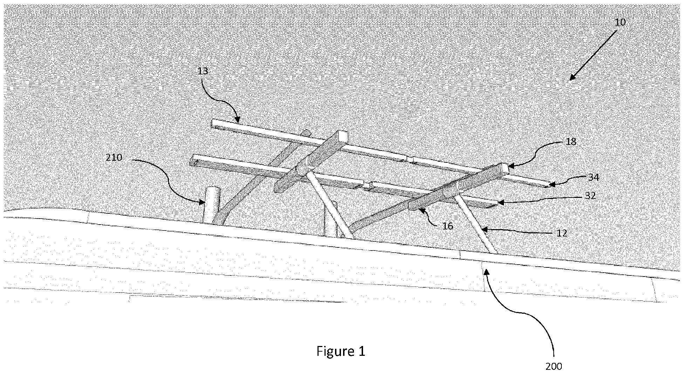

Referring firstly to Figure 1, a vehicle charging arrangement is generally indicated at 10. The vehicle charging arrangement includes a first connector 12, and a second connector 13. The first and second connectors 12, 13 include four elongate conductors each, that is, eight conductors in all. In this embodiment, the first connector 12 is mounted to the roof of a bus 200, and the second connector 13 is provided on an overhead charging gantry 210.

The first connector 12 includes first, second, fifth and sixth elongate conductors 16, 18, 20, 22. The first and second elongate conductors are disposed in the same line as each other, each extending from opposite sides of a insulated mount 24. Likewise, the fifth and sixth elongate conductors 20, 22 are disposed in the same line as each other, extending from opposite sides of another insulated mount 26.

The first and second elongate conductors 16, 18, together with their corresponding mount 24, form a substantially horizontal bar above the roof of the bus, and are pivotally mounted to the roof of the bus via a movable arm 28. The fifth and sixth elongate conductors 20, 22 and mount 26 are likewise mounted to the bus on movable arm 30.

Movable arms 28 and 30 can be operated to move first, second, fifth and sixth elongate conductors 16, 18, 20, 22 between an extended position, as shown in Figure 1, and a retracted position in which the pivotal arms 28, 30 and the elongate conductors 16, 18, 20, 22 are all disposed in a substantially horizontal plane just above the roof of the bus 200. The arms 28, 30, may be moved for example by electric motors. However, when the arms 28, 30 are in the extended position, they can be pressed downwardly towards the retracted position on application of a force to the elongate conductors 16, 18, 20, 22 from above. The arms 28, 30 are biased into the extended position and will therefore spring back to the extended position when any force is removed.

When the arms 28, 30 are in the retracted position, they may be locked against the roof of the bus 200, preventing any movement by applying force directly to the conductors 16, 18, 20, 22. The arms 28, 30 can only be moved from the retracted position to the extended position, and can only be locked into the retracted position, by operating the electric motors or other movement means.

The second connector 13 comprises third, fourth, seventh and eighth elongate conductors 32, 34, 36, 38. As shown in the Figure, the first elongate conductor 16 connects with the third elongate conductor 32, the second elongate conductor 18 connects with the fourth elongate conductor 34, the fifth elongate conductor 20 connects with the seventh elongate conductor 35, and the sixth elongate conductor 22 connects with the eighth elongate conductor 38.

The first and third 16, 32 and the fifth and seventh 20, 26 elongate conductors provide high-power charging connections. The second and fourth 18, 34 and sixth and eighth 22, 38 elongate conductors provide low-power pilot and earth connections. As is clear from the Figure, the fourth and eighth elongate conductors 34, 38 are substantially thinner than the third and seventh elongate conductors 32, 36.

A first insulator 40 is provided between the third and seventh elongate conductors 32, 36, and a second insulator 42 is provided between the fourth and eighth elongate conductors 34, 38. The third elongate conductor 32, the first insulator 40 and the seventh elongate conductor 36 form a bar and the fourth elongate conductor 34, the second insulator 42 and the eighth elongate conductor 38 form another bar, the two bars running parallel to each other, and spaced by around 50cm from each other.

The first and second insulators 40, 42 are thinner than the conductors 32, 36, 34, 38 to which they are respectively connected. In this way, the insulators form waisted sections of the bars. In particular, a contact surface of the second vehicle connector 12 has inset insulating sections between the conducting parts. The contact surface faces the bus 200 in the Figure.

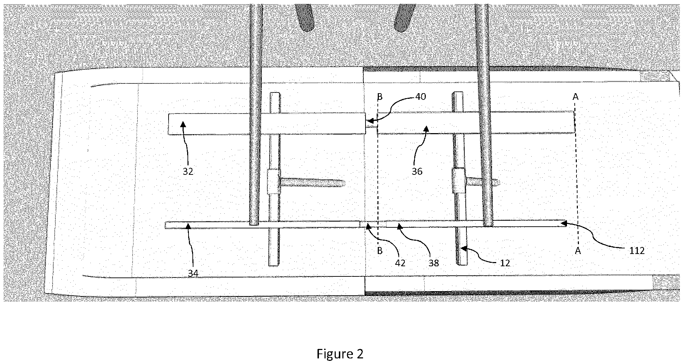

Referring now to Figure 2, the first connector 12 and second connector 13 are shown from above. In this Figure, the relative lengths and widths of the third, fourth, seventh and eighth elongate conductors 32, 34, 36, 38, and the first and second insulators 40, 42, are clearly visible. In particular, the eighth elongate conductor 38 has both ends inward of the ends of the seventh elongate conductor 36, as shown by lines AA and BB. The second insulator 42 is longer than the first insulator 40.

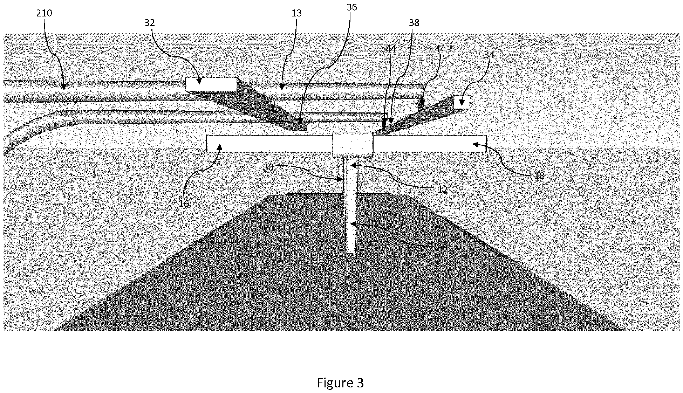

Referring now to Figure 3, the pivoting arms 28, 30 of the first connector 12 are shown in a partially extended position. The biasing arrangement of the second charging conductor 13 is also illustrated in this Figure. The fourth and eighth elongate conductors 34, 38 are mounted to the charging gantry 210 via springs, and are suspended on the springs a few centimetres below the level of the third and seventh elongate conductors 32, 36. When the first connector 12 is extended to meet the second connector 13, the second and sixth elongate conductors 18, 22 will push upwardly on the fourth and eighth elongate conductors 34, 38. As a result, the fourth and eighth elongate conductors 34, 38 will move against the springs 44. In this way, the vertical offset between the third and seventh elongate conductors 32, 36 and the fourth and eighth elongate conductors 34, 38 is automatically adjusted when the vehicle is engaged in the charging station. If the vehicle is parked on a flat surface and the conductors are undamaged then the fourth and eighth elongate conductors 34, 38 will be lifted to the same height as the third and seventh elongate conductors 32, 36 when charging is in progress.

The force required to move the fourth and eighth elongate conductors 34, 38 against the springs 44 is around 10 to 15 Newtons. The pivoting arms 28, 30 may push the second and sixth elongate conductors 18, (22) with a force of around 80 Newtons. Therefore, when charging, the first and second connectors 12, 13 will push against each other with a force of around 65 Newtons, which is sufficient to provide a good electrical contact.

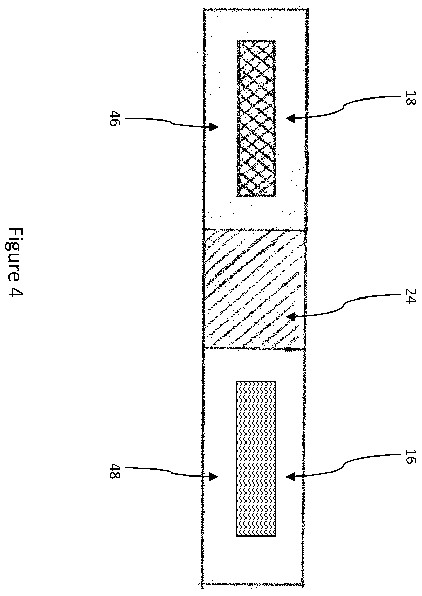

The arrangement of the first and second elongate conductors 16, 18 is best seen in Figure 4. The first and second elongate conductors 16, 18 extend from either side of a central insulating mount 24. The overall extent of the first and second conductors 16, 18 from the mount 24 is similar. However, the actual contact area 46 which can form an electrical connection with the second charging connector 13 is substantially reduced on the second elongate conductor 18 relative to the first elongate conductor 16. The contact area of the first elongate conductor extends across substantially the entire length of the conductor 16. The contact area 46 of the second elongate conductor 18 has an overall shorter length than the contact area of the first elongate conductor 16.

The contact area 46 of the second elongate conductor 18, together with the spacing between the third and fourth conductors (32, 34) defines a working area 48 on the first elongate conductor 16. The working area 48 is inward of the ends of the first elongate conductor 16, ensuring a good stable connection to the first elongate conductor 16.

It will be appreciated that the arrangement of contact areas can be embodied in a number of different ways. For example, the contact area 46 of the second elongate conductor 18 may be formed as a raised area on a surface of the conductor, or as a conducting section surrounded by insulating material. Alternatively, the central mount 24 may be extended and the second elongate conductor 18 shortened, with the contact area 46 extending along the entire length of the second elongate conductor 18.

The embodiments described above are provided by way of example only, and various changes and modifications will be apparent to persons skilled in the art without departing from the scope of the present invention as defined by the appended claims.

## Claims

1. A vehicle charging connector (13) comprising a first elongate conductor (32) providing a high power charging connection and a second elongate conductor (34) providing a pilot or earth connection, the first and second elongate conductors having longitudinal axes running parallel with each other, and the first and second elongate conductors being spaced from each other in a direction perpendicular to their longitudinal axes,
the second elongate conductor having a charging position, in which the longitudinal axes of the first and second elongate conductors define a common plane, and a rest position, in which the longitudinal axis of the first elongate conductor is in the common plane defined for the charging position, but the longitudinal axis of the second elongate conductor is perpendicularly offset from the common plane defined in the charging position,
the second elongate conductor being biased into the rest position by a biasing arrangement (44, 210) and being movable out of the rest position to the charging position on application of a force to the second elongate conductor, so that in use a connection is made to the second conductor before a connection is made to the first elongate conductor when a second charging connector (12) comprising a pair of conductors (16, 18) in a fixed position relative to each other and extending with their longitudinal axes along a common axis, which is parallel to the common plane defined by the first and second elongate conductors in the charging position, is moved towards the vehicle charging connector, in a direction perpendicular to the common plane.

2. A vehicle charging connector (13) as claimed in claim 1, in which the first elongate conductor is adapted to make a high power connection and the second elongate conductor is adapted to make a low power connection, for example the second elongate conductor having a width perpendicular to its longitudinal axis and parallel with the spacing between the first and second elongate conductors which is smaller than a corresponding width of the first elongate conductor.

3. A vehicle charging connector (13) as claimed in claim 1 or claim 2, mountable to a charging gantry (210).

4. A vehicle charging connector (13) as claimed in claim 3, mounted to an overhead charging gantry (210).

5. A vehicle charging connector (13) as claimed in claim 1 or claim 2, mountable to a vehicle (200).

6. A vehicle charging connector (13) as claimed in claim 5, mounted to the roof of a vehicle (200).

7. A vehicle charging connector (13) as claimed in any of claims 1 to 6, further comprising third and fourth elongate conductors (36, 38), the third and fourth elongate conductors having longitudinal axes running parallel with each other, the third and fourth elongate conductors being spaced from each other in a direction perpendicular to the longitudinal axes of the third and fourth elongate conductors, and the third and fourth elongate conductors being spaced from the first and second elongate conductors,
the fourth elongate conductor having a charging position in which the longitudinal axes of the third and fourth elongate conductors define a second common plane, and a rest position, in which the longitudinal axis of the third elongate conductor is still in the second common plane defined for the charging position, but the longitudinal axis of the fourth elongate conductor is perpendicularly offset from the second common plane defined in the charging position,
the fourth elongate conductor being biased towards the rest position, and being movable out of the rest position to the charging position on application of a force to the fourth elongate conductor.

8. A vehicle charging connector (13) as claimed in claim 3 or 4, movably mounted to a charging gantry (210).

9. A vehicle charging connector (13) as claimed in claim 8, in which the first and second elongate conductors are movable in a direction perpendicular to the longitudinal axes of the first and second elongate conductors and also perpendicular to the spacing between the first and second elongate conductors.

10. A vehicle charging connector (13) as claimed in any of claims 1 to 9, in which a contact of the second elongate conductor is shorter than a contact of the first elongate conductor, and in which the contacts of the first and second elongate conductors are disposed side-by-side, both ends of the contact of the second elongate conductor being located inwardly of the ends of the contact of the first elongate conductor.

11. A vehicle charging connector (13) as claimed in claim 7, in which a contact area of the fourth elongate conductor is shorter than a contact area of the third elongate conductor, and in which the contact areas of the third and fourth elongate conductors are disposed side-by-side, both ends of the contact area of the fourth elongate conductor being located inwardly of the ends of the contact area of the third elongate conductor.

12. A vehicle charging connector (13) as claimed in claim 7 or claim 11, in which the fourth elongate conductor has a width perpendicular to its longitudinal axis and parallel with the spacing between the third and fourth elongate conductors which is smaller than a corresponding width of the third elongate conductor.

13. A vehicle charging connector (13) as claimed in any of claims 7, 11 or 12, in which the first and third elongate conductors are separated from each other by a first insulator (40), and the second and fourth elongate conductors are separated from each other by a second insulator (42).

14. A vehicle charging connector (13) as claimed in claim 13, in which the second insulator has a length parallel with the first, second, third and fourth elongate conductors which is longer than a corresponding length of the first insulator.

15. A vehicle charging connector (13) as claimed in claim 13 or 14, in which an outer surface of at least one of the first and second insulators is set inwardly of a corresponding parallel outer surface of the first and third or second and fourth elongate conductors which mounts the contacts of the respective conductors.

## Patentansprüche

1. Fahrzeugladeverbinder (13), der einen ersten länglichen Leiter (32), der eine Ladeverbindung mit hoher Stromaufnahme bereitstellt, und einen zweiten länglichen Leiter (34), der eine Pilot- oder Erdungsverbindung bereitstellt, umfasst, wobei der erste und zweite längliche Leiter parallel zueinander verlaufende Längsachsen aufweisen und der erste und zweite längliche Leiter in senkrechter Richtung zu ihren Längsachsen voneinander beabstandet sind,
wobei der zweite längliche Leiter eine Ladeposition aufweist, in der die Längsachsen des ersten und zweiten länglichen Leiters eine gemeinsame Ebene und eine Ruheposition definieren, in der die Längsachse des ersten länglichen Leiters in der für die Ladeposition definierten gemeinsamen Ebene ist, die Längsachse des zweiten länglichen Leiters jedoch senkrecht versetzt von der in der Ladeposition definierten gemeinsamen Ebene ist,
wobei der zweite längliche Leiter von einer Vorspannanordnung (44, 210) in die Ruheposition vorgespannt wird und bei Anwendung einer Kraft auf den zweiten länglichen Leiter aus der Ruheposition in die Ladeposition bewegbar ist, sodass in Verwendung eine Verbindung zum zweiten Leiter hergestellt wird, bevor eine Verbindung zum ersten länglichen Leiter hergestellt wird, wenn ein zweiter Ladeverbinder (12), der ein Leiterpaar (16, 18) in einer festen Position zueinander umfasst, dessen Leiter sich mit ihren Längsachsen entlang einer gemeinsamen Achse erstrecken, die parallel zur vom ersten und zweiten länglichen Leiter in der Ladeposition definierten gemeinsamen Ebene ist, in einer zur gemeinsamen Ebene senkrechten Richtung zum Fahrzeugladeverbinder bewegt wird.

2. Fahrzeugladeverbinder (13) nach Anspruch 1, bei dem der erste längliche Leiter darauf ausgelegt ist, eine Verbindung mit hoher Stromaufnahme herzustellen, und der zweite längliche Leiter darauf ausgelegt ist, eine Niederstromverbindung herzustellen, wobei zum Beispiel der zweite längliche Leiter senkrecht zu seiner Längsachse und parallel zum Abstand zwischen dem ersten und zweiten länglichen Leiter eine Breite aufweist, die kleiner als eine entsprechende Breite des ersten länglichen Leiters ist.

3. Fahrzeugladeverbinder (13) nach Anspruch 1 oder Anspruch 2, der an ein Ladeportal (210) montierbar ist.

4. Fahrzeugladeverbinder (13) nach Anspruch 3, der an ein obenliegendes Ladeportal (210) montiert ist.

5. Fahrzeugladeverbinder (13) nach Anspruch 1 oder Anspruch 2, der an ein Fahrzeug (200) montierbar ist.

6. Fahrzeugladeverbinder (13) nach Anspruch 5, der an das Dach eines Fahrzeugs (200) montiert ist.

7. Fahrzeugladeverbinder (13) nach einem der Ansprüche 1 bis 6, der weiter einen dritten und vierten länglichen Leiter (36, 38) umfasst, wobei der dritte und vierte längliche Leiter parallel zueinander laufende Längsachsen aufweisen, der dritte und vierte längliche Leiter in einer Richtung senkrecht zu den Längsachsen des dritten und vierten länglichen Leiters beabstandet sind und der dritte und vierte längliche Leiter vom ersten und zweiten länglichen Leiter beabstandet sind,
wobei der vierte längliche Leiter eine Ladeposition aufweist, in der die Längsachsen des dritten und vierten länglichen Leiters eine zweite gemeinsame Ebene und eine Ruheposition definieren, in der die Längsachse des dritten länglichen Leiters noch in der für die Ladeposition definierten zweiten gemeinsamen Ebene ist, die Längsachse des vierten länglichen Leiters jedoch von der in der Ladeposition definierten zweiten gemeinsamen Ebene senkrecht versetzt ist,
wobei der vierte längliche Leiter zur Ruheposition vorgespannt wird und bei Anwendung einer Kraft auf den vierten länglichen Leiter aus der Ruheposition bewegbar ist.

8. Fahrzeugladeverbinder (13) nach Anspruch 3 oder 4, der bewegbar an ein Ladeportal (210) montiert ist.

9. Fahrzeugladeverbinder (13) nach Anspruch 8, bei dem der erste und zweite längliche Leiter in einer zu den Längsachsen des ersten und zweiten länglichen Leiters senkrechten Richtung und ebenfalls senkrecht zum Abstand zwischen dem der ersten und zweiten länglichen Leiter bewegbar sind.

10. Fahrzeugladeverbinder (13) nach einem der Ansprüche 1 bis 9, bei dem der Kontakt des zweiten länglichen Leiters kürzer als der Kontakt des ersten länglichen Leiters ist und bei dem die Kontakte des ersten und zweiten länglichen Leiters nebeneinander angeordnet sind, wobei sich beide Enden des Kontakts des zweiten länglichen Leiters einwärts der Enden des Kontakts des ersten länglichen Leiters befinden.

11. Fahrzeugladeverbinder (13) nach Anspruch 7, bei der ein Kontaktbereich des vierten länglichen Leiters kürzer als ein Kontaktbereich des dritten länglichen Leiters ist und bei dem die Kontaktbereiche des dritten und vierten länglichen Leiters nebeneinander angeordnet sind, wobei sich beide Enden des Kontaktbereichs des vierten länglichen Leiters einwärts der Enden des Kontaktbereichs des dritten länglichen Leiters befinden.

12. Fahrzeugladeverbinder nach (13) nach Anspruch 7 oder Anspruch 11, bei dem der vierte längliche Leiter senkrecht zu seiner Längsachse und parallel zum Abstand zwischen dem dritten und vierten länglichen Leiter eine Breite aufweist, die kleiner als die entsprechende Breite des dritten länglichen Leiters ist.

13. Fahrzeugladeverbinder (13) nach Anspruch 7, 11 oder 12, bei dem der erste und dritte längliche Leiter durch einen ersten Isolator (40) voneinander getrennt sind und der zweite und vierte längliche Leiter durch einen zweiten Isolator (42) voneinander getrennt sind.

14. Fahrzeugladeverbinder (13) nach Anspruch 13, bei dem der zweite Isolator eine zum ersten, zweiten, dritten und vierten länglichen Leiter parallele Länge aufweist, die länger als eine entsprechende Länge des ersten Isolators ist.

15. Fahrzeugladeverbinder (13) nach Anspruch 13 oder 14, bei dem eine äußere Oberfläche mindestens eines Isolators des ersten und zweiten Isolators einwärts einer entsprechenden parallelen äußeren Oberfläche des ersten und dritten oder vierten länglichen Leiters gesetzt ist, die die Kontakte des jeweiligen Leiters befestigt.

## Revendications

1. Connecteur de charge de véhicule (13) comprenant un premier conducteur allongé (32) servant de connexion de charge haute puissance, et un deuxième conducteur allongé (34) servant de connexion pilote ou de terre, les premier et deuxième conducteurs allongés possédant des axes longitudinaux parallèles entre eux, et les premier et deuxième conducteurs allongés étant espacés l'un de l'autre dans une direction perpendiculaire à leurs axes longitudinaux,
le deuxième conducteur allongé possédant une position de charge, dans laquelle les axes longitudinaux des premier et deuxième conducteurs allongés définissent un plan commun, et une position de repos, dans laquelle l'axe longitudinal du premier conducteur allongé se trouve dans le plan commun défini pour la position de charge, mais l'axe longitudinal du deuxième conducteur allongé est décalé perpendiculairement par rapport au plan commun défini dans la position de charge,
le deuxième conducteur allongé étant incliné dans la position de repos par un agencement d'inclinaison (44, 210) et pouvant être déplacé de la position de repos à la position de charge lors de l'application d'une force sur le deuxième conducteur allongé, de sorte qu'en cours d'usage une connexion soit effectuée sur le deuxième conducteur avant d'effectuer une connexion sur le premier conducteur allongé, lorsqu'un deuxième connecteur de charge (12), comprenant une paire de conducteurs (16, 18) dans une position fixe l'un par rapport à l'autre et s'étendant avec leurs axes longitudinaux le long d'un axe commun, qui est parallèle au plan commun défini par les premier et deuxième conducteurs allongés dans la position de charge, est déplacé vers le connecteur de charge du véhicule dans une direction perpendiculaire au plan commun.

2. Connecteur de chargement de véhicule (13) selon la revendication 1, dans lequel le premier conducteur allongé est adapté pour effectuer une connexion haute puissance, et le deuxième conducteur allongé est adapté pour effectuer une connexion basse puissance, par exemple la largeur du deuxième conducteur allongé étant perpendiculaire à son axe longitudinal et parallèle à l'espacement entre les premier et deuxième conducteurs allongés, qui est inférieure à une largeur correspondante du premier conducteur allongé.

3. Connecteur de chargement de véhicule (13) selon la revendication 1 ou la revendication 2, pouvant être monté sur un portique de charge (210).

4. Connecteur de chargement de véhicule (13) selon la revendication 3, monté sur un portique de charge supérieur (210).

5. Connecteur de chargement de véhicule (13) selon la revendication 1 ou la revendication 2, pouvant être monté sur un véhicule (200).

6. Connecteur de chargement de véhicule (13) selon la revendication 5, monté sur le toit d'un véhicule (200).

7. Connecteur de chargement de véhicule (13) selon une quelconque des revendications 1 à 6 , comprenant en outre des troisième et quatrième conducteurs allongés (36, 38), les axes longitudinaux des troisième et quatrième conducteurs allongés étant parallèles entre eux, les troisième et quatrième conducteurs allongés étant espacés l'un de l'autre dans une direction perpendiculaire aux axes longitudinaux des troisième et quatrième conducteurs allongés, et les troisième et quatrième conducteurs allongés étant espacés des premier et deuxième conducteurs allongés,
la position de charge du quatrième conducteur allongé étant telle que les axes longitudinaux des troisième et quatrième conducteurs allongés définissent un deuxième plan commun, et une position de repos dans laquelle l'axe longitudinal du troisième conducteur allongé se trouve encore dans le deuxième plan commun défini pour la position de charge, mais l'axe longitudinal du quatrième conducteur allongé est décalé perpendiculairement par rapport au deuxième plan commun défini dans la position de charge,
le quatrième conducteur allongé étant incliné vers la position de repos, et pouvant être déplacé de la position de repos à la position de charge lors de l'application d'une force sur le quatrième conducteur allongé.

8. Connecteur de chargement de véhicule (13) selon la revendication 3 ou 4, montée de façon mobile sur un portique de charge (210).

9. Connecteur de chargement de véhicule (13) selon la revendication 8, dans lequel les premier et deuxième conducteurs allongés peuvent être déplacés dans une direction perpendiculaire d'une part aux axes longitudinaux des premier et deuxième conducteurs allongés, d'autre part à l'espacement entre les et deuxième conducteurs allongés.

10. Connecteur de chargement de véhicule (13) selon une quelconque des revendications 1 à 9, dans lequel un contact du deuxième conducteur allongé est plus court qu'un contact du premier conducteur allongé, et dans lequel les contacts des premier et deuxième conducteurs allongés sont disposés côte à côte, les deux bouts du contact du deuxième conducteur allongé étant situés vers l'intérieur des bouts du contact du premier conducteur allongé.

11. Connecteur de chargement de véhicule (13) selon la revendication 7, dans lequel une surface de contact du quatrième conducteur allongé est plus courte qu'une surface de contact du troisième conducteur allongé, et dans lequel les surfaces de contact des troisième et quatrième conducteurs allongés sont disposées côte à côte, les deux bouts de la surface de contact du quatrième conducteur étant situés vers l'intérieur des bouts de la surface de contact du troisième conducteur allongé.

12. Connecteur de chargement de véhicule (13) selon la revendication 7 ou la revendication 11, dans lequel la largeur du quatrième conducteur allongé est perpendiculaire à son axe longitudinal et parallèle à l'espacement entre les troisième et quatrième conducteurs allongés, qui est inférieure à une largeur correspondante du troisième conducteur allongé.

13. Connecteur de chargement de véhicule (13) selon une quelconque des revendications 7, 11 ou 12, dans lequel les premier et troisième conducteurs allongés sont séparés l'un de l'autre par un premier isolateur (40), et les deuxième et quatrième conducteurs allongés sont séparés l'un de l'autre par un deuxième isolateur (42).

14. Connecteur de chargement de véhicule (13) selon la revendication 13, dans lequel la longueur du deuxième isolateur est parallèle aux premier, deuxième, troisième et quatrième conducteurs allongés, et plus longue qu'une longueur correspondante du premier isolateur.

15. Connecteur de chargement de véhicule (13) selon la revendication 13 ou 14, dans lequel une surface extérieure d'au moins un des premier et deuxième isolateurs est agencée intérieurement par rapport à une surface extérieure parallèle correspondante des premier, deuxième, troisième et quatrième conducteurs allongés sur laquelle sont montés les contacts des conducteurs respectifs.
